Europäisches Patentamt

European Patent Office

Office européen des brevets

(19)

(11) Publication number: **0 230 896 B1**

## EUROPEAN PATENT SPECIFICATION

(12)

(45) Date of publication of patent specification: **26.08.92**   (51) Int. Cl.5: **G06K 15/10**

(21) Application number: **87100307.5**

(22) Date of filing: **13.01.87**

(54) **Microprocessor control unit for serial dot matrix printer.**

(30) Priority: **22.01.86 IT 1915786**

(43) Date of publication of application:
**05.08.87 Bulletin 87/32**

(45) Publication of the grant of the patent:
**26.08.92 Bulletin 92/35**

(84) Designated Contracting States:
**DE FR GB**

(56) References cited:
**EP-A- 0 062 301**
**EP-A- 0 132 576**
**US-A- 4 487 515**

**PATENT ABSTRACTS OF JAPAN, vol. 6, no. 75 (P-114)[953], 12th May 1982; & JP-A-57 13 588 (TOKYO SHIBAURA DENKI K.K.) 23-01-1982**

**PATENT ABSTRACTS OF JAPAN, vol. 8, no. 164 (M-313)[1601], 28th July 1984; & JP-A-59 59 468 (FUJITSU K.K.) 05-04-1984**

(73) Proprietor: **BULL HN INFORMATION SYSTEMS ITALIA S.p.A.**
**Via Martiri d'Italia 3**
**I-10014 Caluso (Torino)(IT)**

(72) Inventor: **Niessen, Bernhard**
**Via B. D'Alviano 7**
**I-20146 Milano(IT)**

# Description

The present invention relates to a microprocessor control unit for a serial dot matrix printer.

It is known that in order to control dot matrix serial printers, whether they are impact printers, ink jet printers, thermal printers or like, extensive use is made of microprocessor control units. Among the operations to be controlled by the microprocessor there are the print operations, that is, the selective energization of the various print elements in time.

It is known that in the serial dot matrix printers the print of the characters along a print line is accomplished by dots by selectively activating a vertical column of print elements which moves along the print line.

At subsequent moments the print element column takes up successive variable positions along the print line.

The selective actuation of the print elements at suitable instants allows the selective printing of dots arranged in a matrix, which dots configure the desired characters.

Generally a control unit consists of a microprocessor, a timing unit, a read/write working memory (RAM), a permanent memory (ROM) and either command or I/O registers. The permanent memory stores the microprocessor control programs and the character generation tables, that is, the bytes tables which represent in binary code the positions of the various dots in a matrix which enable the configuration of the character to be developed.

In order to control the print operations the microprocessor reads in the working memory, in an area more specifically called the "Line Buffer", which are the successive print characters in the print line, and for each character it extracts from the permanent memory, and more precisely from the character generation tables, those codes which are representative of the various dot positions that make up the character to be printed.

These codes cannot be used directly to activate the print elements in that the print must be synchronized with the movement of the print elements along the print line.

Therefore the codes are read, then, if necessary, processed so as to convert them to "patterns" or controlcodes which can be directly used to selectively activate the actuators and then loaded into a working memory area, which is called the "Circular Buffer", to be successively used in synchronization with the movement of the print elements.

The synchronization is provided by the timing unit which generates an interrupt signal at predetermined time intervals.

This interrupt signal notifies the microprocessor that the print elements are in a position in the print line where it is necessary to activate selectively the print elements.

Therefore the microprocessor must interrupt the operations in course of execution and perform a print routine which reads into the circular buffer one or more command patterns and then loads these patterns into one or more command registers so as to selectively energize them.

The frequency with which this routine is to be executed depends on both the print speed and the horizontal resolution of the print matrix.

Typically for a 200-character per second print speed and with a horizontal resolution of the print matrix of 9 positions per character (corresponding to a so called draft print) the frequency is 1.800 routines per second.

Since the execution time required by each print routine is in the order of 40-50 microsec., 7-9% of the time is used by the microprocessor to control the print operations.

Therefore it can devote a great amount of time to control other operations such as the print element movement along the print line, the print media movement, the reception of the characters to be printed, the loading and updating of both the line buffer and the circular buffer.

However in the case of quality printing the situation changes completely in that the microprocessor must control print operations in which the various characters must be printed according to print matrixes having a high number of columns, typically from 36 to 60.

In this case the number of interrupts and of the corresponding execution of the print routine increases proportionately, thus engaging the microprocessor from 30 to 50% of its time and over. In this condition the microprocessor might not be able to handle all the operations which have to be jointly controlled.

To overcome these limitations various solutions have been proposed. However they introduce either limitations in the flexibility of printer usage or increases in its complexity and cost.

For example, in US-A-4.159.882 the functions relevant to the control of the print operations are performed by an I/O co-processor which jointly with a direct memory access circuit (or DMA) carries out all the operations required for printing without the intervention of the central processor.

As a result, the circuit complexity and the related cost are greatly increased.

A different approach is described in EP-A-0132576, which is deemed to be the available prior art closest to the present invention and from which the invention departs.

According to such approach, even if a print matrix can virtually be constituted by a high number of columns, the print operations can only be executed in columns which are at a distance from one another of a quantity which is variable but not less than a minimum number of columns. The microprocessor is therefore interrupted to execute the print routine only in correspondence with the columns where the performing of print operations is really needed.

This approach virtually precludes the possibility of printing graphics and complex figures as well as character sets (type fonts) with peculiar attributes.

This drawback is overcome at least partially by the use of a microprocessor control unit for serial matrix printers and related control procedure which is the object of the present invention according to the claims.

According to this invention the control unit has been designed so as to reduce to a minimum the execution time of the printing routine by making it simpler.

The invention is based on the fact that, contrary to what happens in the control units and related print routines known in the art where the read operations of the printing patterns from the memory circular buffer (which are memory operations) and the loading operations of the command registers of the print elements (which are input/output operations with peripheral units) are separate operations activated by different instructions and executed at different times, in the control unit which is the object of the present invention these two separate operations are executed simultaneously owing to the effect of a single instruction.

It should be noticed that the microprocessors now on the market do not include in their instruction set an instruction which is able to simultaneously activate the execution of the memory read operation and the simultaneous loading of the read data into an external command register.

According to the invention, the simultaneous performance of these two operations is made possible by the use of a signal or a set of signals output from the microprocessor and asserted simultaneously with a read signal which controls the execution of a read operation.

The assertion of such signal(s), together with the read control signal, causes the loading of the data, read out as a consequence of the read operation, in the external command register, thus converting a memory read instruction in an instruction which jointly performs a memory read operation and a register write operation.

The signal(s) which control the execution of the load operation, may be signal(s) representative of an address field in the address used for the read operation.

The signal(s) which control the execution of the load operation may also be representative of information other than an address field and may be output by the microprocessor at a suitable output port other than an address output port.

In this case the signal(s) which establishes this conversion or modification of the memory read instruction in a memory read/register write operation is suitably preset to a predetermined binary logic value at a suitable point in the print routine flow and is reset to the other binary logic value at a second point in the print routine flow, so that all the memory read instructions which are contained in the flow segment delimited by the two points are modified as desired. It is thus possible to reduce the execution time of the print routine by approximately 25%.

Even if this reduction may appear small, yet it avoids both criticism of functioning and irreconcilable conflicts in the use of the microprocessor by concurrent routines.

The features and the advantages of the invention will appear more clearly from the following description of a preferred embodiment of the invention and from the ennclosed drawings where:

Fig. 1 shows the wiring diagram of a microprocessor control unit embodied according to the present invention.

Fig. 2 shows in logic flow diagram a printing elements control routine performed by the unit shown in Fig. 1.

Fig. 3 shows in logic flow diagram a printing elements control routine executed by a control unit of a type know in the art.

Fig. 4 shows in timing diagram some electric signals which are generated during the execution of the control routine show in Fig. 3.

Fig. 5 shows the wiring diagram of one variant of the control unit shown in Fig. 1.

Fig. 6 shows in logic flow diagram a portion of the printing elements control routine executed by the unit shown in Fig. 5.

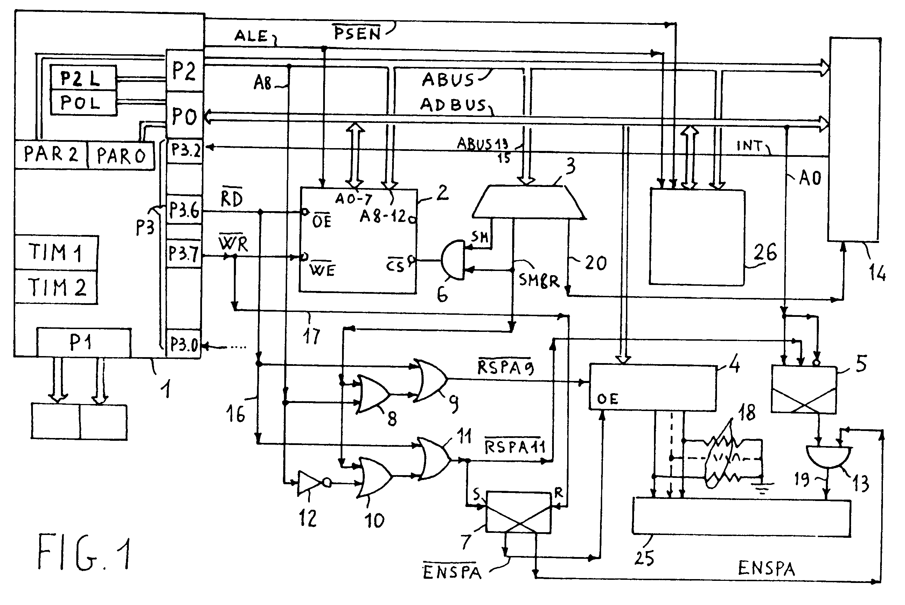

Fig. 1 shows in block diagram the microprocessor control unit for printer which is the object of the present invention.

The control unit comprises a microprocessor 1, a program memory (ROM) 26,a data external memory (RAM) 12, a decoder 3, an 8 bit register 4, a JK type flip flop 5, two 2 input AND gates 6,13 a RS flip flop 7, four 2 input OR gates 8,9,10,11 a NOT logical element 12 and an integrated I/O functional unit Port 14 which acts as an I/O port for commands, data, signals.

Other possible elements are not relevant for the comprehension of this invention.

Microprocessor 1 preferably consists of an integrated circuit which is manufactured by the firm INTEL with code 8051 or 8052.

The use of this microprocessor proves to be particularly advantageous in that it incorporates a plurality of functions and reduce to a minimum the need for external components.

In particular said microprocessor incorporates internal working register banks with a capacity of 123 bytes, a special function register, two timer counters (three in the case of microprocessor 8052) and four 8 bit bidirectional I/O ports.

Furthermore for two of these four ports the single bits can perform multifunctional roles.

For further characteristics and explanations on the functioning of said microprocessor refer to the INTEL manual"Microcontroller Handbook 1983"and in particular to chapter 6 - page 6 - 1 through 6-29 for the description of its architecture and functioning and to chapter 8 from page 8-1 to 8-60 for the description of the set of instructions executed by such microprocessor.

For the reminder of this paper only those details which are required for the comprehension of this invention will be supplied. As already said, microprocessor 1 incorporates the major part of the elements necessary to perform the function which control the serial matrix printer:

Above all, as shown in Fig. 1, it incorporates Port P3. 0 7, which is programmed for the following operations.

Terminal P 3.6 :

Is programmed to output a timed read signal to read the external memory 2

Terminal P 3.7 :

Is programmed to output a timed write signal to write the external memory 2

Terminal P 3.0 :

is programmed to input serial data from a transmission line.

Terminals P 3.2 and P 3.3:

are programmed to input external interrupt signals

Furthermore port P1 which is programmed to output command and actuation signals for the movement of both a print carriage on which the print head is mounted and the print media.

Finally two programmable timer/counter (TIM1,TIM2) for the internal generation of the interrupt signals which periodically recall at predefined intervals, the microprocessor to perform specific operations such as the activation of either the print elements or the activation of the circuits which control the carriage or paper movement respectively.

The components previously cited and shown in Fig. 1 are excluded from microprocessor 1.

Port P2 of microprocessor 1 is externally connected to an 8 leads address bus (ABUS).

Within the microprocessor Port P2 is connected to a program address register PAR2 and to register P2L which can put on port P2 in a mutually exclusive way, owing to internal command, the most significant part of either a program address or a memory address. Port P0 in microprocessor 1 is externally connected to an 8 leads data/address bus (ADBUS).

Within the microprocessor port P0 is connected to a program address register PAR0 and to a register POL which can put on port P0, in a mutually exclusive way, owing to internal commands, the least significant part of either a program address (register PAR0) or a memory address or even e generic data (register POL).

Register POL can also receive from Port P0 a generic data.

The ABUS and ADBUS buses constitute a system bus through which the various units such as RAM2, ROM26, I/O port 14 and register 4 (as well as flip flop 5) communicate with microprocessor 1.

The information flow on the system bus is controlled by two timing signals, $\overline{PSEN}$ and ALE in output from microprocessor 1 and by signals $\overline{RD}$ and $\overline{WR}$ in output from terminals P3.6 and P3.7.

The ADBUS is used by microprocessor to send to either RAM2 or ROM 26 the 8 least significant bits of an address and in a successive time interval (by means of a techniques known as multiplexing) to send or receive from one of the units connected to the bus an 8 bit binary data.

Signal ALE is used as a strobe signal for the addresses sent by microprocessor.

Signal $\overline{PSEN}$ is used as a timing signal only for the information read out form program memory (ROM) 26.

Signal $\overline{RD}$ (or $\overline{WR}$ respectively) is used as a timing signal only for the information read or written respectively into or from RAM2. The ABUS is used by microprocessor 1 to send to RAM and to other units connected to said microprocessor an 8-bit binary code which acts as unit selection code and also, with a certain number of bits, as address code (most significant bits) for RAM 2.

In the embodiment shown in Fig. 1 RAM 2 and ROM 26 have an 8K bytes capacity and 13 address bits are required. Therefore the ADBUS bus is connected to the addressing inputs A0-7 of RAM 2 and ROM 26 and the ABUS 8-12 leads of $\overline{ABUS}$ are connected to the address inputs A8-12 of RAM 2 and ROM 26.

Addresses A0-7 of RAM 2 and ROM 26 act also as data inputs/outputs. Leads ABUS 13-15 are connected to the inputs of decoder 3, for example an integrated circuit which is available on the market with code 74LS133.

Decoder 3 has 8 outputs and for each different 3 bit code in input, it supplies on one of the 8 outputs, a signal at logic level 0, whereas the other outputs are held at logic level 1.

When the input code is 000, decoder 3 provides on an output SM a signal at logic level 0 for the selection of RAM 2.

Output SM is connected to an input of the AND gate 6 whose output is connected to the memory input $\overline{CS}$ for the selection (or activation) of RAM 2.

When $\overline{CS}$ = 0 memory 2 is selected or activated.

Furthermore memory 2 has an input $\overline{OE}$ connected to output P 3.6 of microprocessor 1 to receive signal $\overline{RD}$.

When $\overline{RD}$ = 0 terminals AO-7 of memory 2 are enabled in output and data read from memory is transmitted onto the system bus.

Furthermore memory 2 is provided with an input $\overline{WE}$ which is connected to output P3.7 of microprocessor 1 to receive signal $\overline{WR}$.

When $\overline{WR}$ = 0 terminals A0-7 of memory 2 are enabled in input and the data present on said terminals is latched into memory (at the previously specified address) with the transition of $\overline{WR}$ from "0" to "1".

Referring back to decoder 3, when the code in input is 001, it supplies on an output SM & R a signal at logic level 0.

Output SM & R is connected to a second input of the AND gate 6 and to a first input of two OR gates 8,10 which receive, on a second input, signal A8 and $\overline{A8}$ respectively ($\overline{A8}$ being provided by NOT12 which inverts signal A8 present on lead A8 of the address bus ABUS. The output of the OR gates 8,10 is connected to a first input of the OR gates 9,11 which receive on a second input through wire 16 signal $\overline{RD}$ which is present at output P3.6 of microprocessor.

The output from the OR gates 9,11 is connected to the set input S of flip flop 7 (which is set by a signal at logic level 0 applied to the set input).

The reset input R of flip flop 7 is connected, through lead 17, to output P 3.7 of microprocessor 1, that is flip flop 7 is reset by signal $\overline{WR}$ at logic level 0.

Output $\overline{Q}$ from flip flop 7 is connected to output enablepin OE of register 4.

When flip flop 7 is set the logic level 0 present at output $\overline{Q}$ enables the register 4 outputs, which are otherwise maintained in a high impedance state,to take the logic levels 0 or 1 stored in the corresponding register cells.

When the outputs from register 4 are disabled, they are held at logic level 0 by resistor set 18 which connect them to ground.

Output Q from flip flop 7 is connected to a first input of AND gate 13, whose second input is connected to the output Q from flip flop 5. The AND gate 13 enables the transfer on output 19 of logic level 1 present at the flip flop 5 output Q only when flip flop 7 is set. The I/O port 14 is connected to the ABUS and ADBUS buses and it is represented on the drawing only for description completeness.

It constitutes a parallel interface for communicating with the external to receive data/commands either from an external EDP system or from a keyboard and to send suitable signals to the external.

In particular, through the I/O port 14 microprocessor 1 can receive from the external some character generation tables and store them in memory 2.

The I/O PORT 14 is selected by microprocessor 1, through a suitable code (for example, 111) present on ABUS 13-15 leads, which is decoded by decoder into a signal at logic level 0 which is present on wire 20 connected to a selection input of port 14.

Alternatively the I/O port 14 may require the intervention of microprocessor 1 by generating an interrupt signal INT which is sent to microprocessor 1.

The direction of the information transfer between microprocessor 1 and port 14 may be controlled by means of signals RD and WR.

In the described embodiment the control unit is designed for the control of a print head having 9 printing actuators.

For this purpose it is foreseen that register 4 be loaded with an 8-bit print pattern which provides the selective control of 8 print elements and that flip flop 5 be loaded with a bit which controls the ninth printing element.

The printing patterns for the control of the first 8 print elements are contained into a circular buffer which is costituted by 256 successive memory locations, corresponding for example to the RAM 2 locations included between the binary addresses from 0000000000000 to 0000011111111 (therefore the address bit A8 is equal to 0).

The print patterns for the control of the ninth printing element are contained into a second section, or appendix, of the circular buffer which is constituted by further 256 successive memory locations whose addresses differ from the previous ones only by bit A8 which is equal to 1 (addresses from 0000100000000 to 0000111111111).

However other organizations are possible as will be described later on.

It is now possible to describe the operation of the control unit shown in Fig. 1 with specific reference to the loading of the printing patterns into register 4 and flip flop 5 by means of a memory read operation and without a successive data transfer from the microprocessor accumulator to any I/O port and in particular to register 4 and to flil flop 5.

It is particularly enphasized that the microprocessors available on the market, and among these microprocessor MC8051, are all provided with a set of instructions enabling data to be transferred from an external memory to the internal accumulator and viceversa from the accumulator to the I/O ports (external or internal ones and viceversa) but they are not provided with instructions allowing data to be transferred from the external memory to an internal or external register port directly.

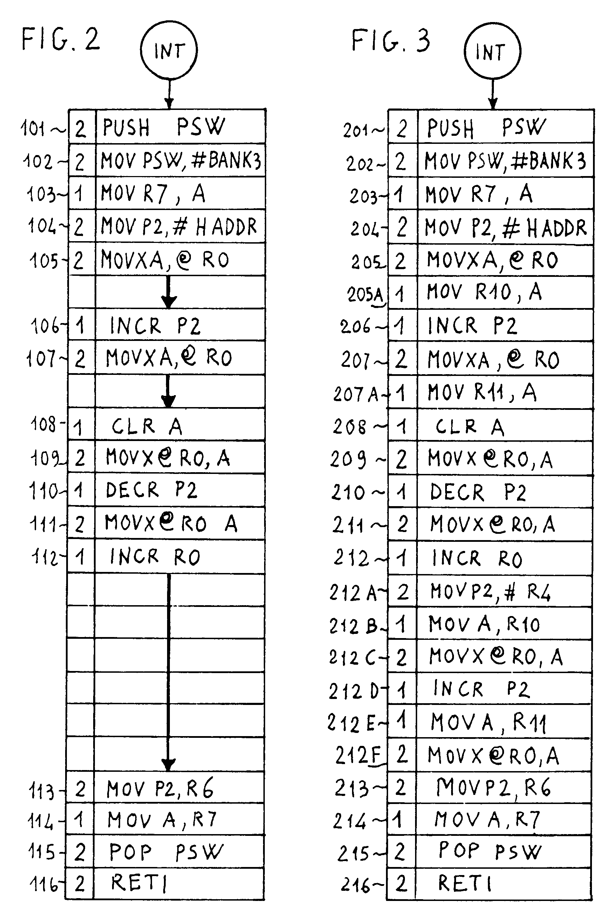

The control unit described in this paper solves this problem as will be easily understood by reference to Fig. 2 which shows in form of logic flow diagram the routine or instruction sequence which controls the printing process.

The number in the column on the left of the flow table in Fig. 2 shows the number of timing cycles the microprocessor needs to perform in order to execute the corresponding instruction shown in the right hand column.

Generally for their execution the instructions require one or two cycles, each with a duration of 1 microsec.

The printing routine is started by an interrupt signal 100 which is generated by a timer internal to microprocessor 1, periodically with a frequency dependent on the printing speed and the printing matrix resolution.

For example in a printer having a printing speed of 200 char/sec and an horizontal resolution of the character matrix of 60 columns the interrupt period can be of app. 83 microsec.

The first instruction 101 which is fetched and executed by the print routine is a save operation: "PUSH PSW" which stores the "program status word" into a suitable register thus freeing the status register.

The second instruction 102, stores into the status register the new "Program status word" to be used durint the process and stored in a suitable register (or specified by the instruction itself).

The third instruction 103 saves the contents of accumulator A into a suitable register R7.

The fourth instruction 104 loads in register P2L which is associated to port P2 an HADDR code which is representative of the most significant part of an address, speifically code 00100000 where bit A 13 is at logic level 1.

Next instruction 105 performs a read cycle of external memory 2 at the address specified for the most significant part by the contents of port P2 and for the least significant part by the contents of register R0.

Register RO contains a pointer to the circular buffer location to be read.

The information read out from memory constitutes the printing pattern which must be loaded into register 4 for the control of the actuators while the instruction performed specifies that said pattern must be loaded into the accumulator.

However the following features should be noted:

Since bit A13 is at logic level 1, decoder 3 sets to logic level 0 the output SM&R actually activating the memory, but at the sametime, since the A8 address bit is at logic level 0 also the output from the OR gate 8 goes to 0 and allows the output from gate 9 to transfer signal $\overline{RD}$ to the clock input of register 4 as a signal $\overline{RSPA9}$ asserted. Thus when $\overline{RD}$ drops to 0 (or becomes asserted) the read out data is available at the output from memory 2 and therefore it is present on ADBUS. With the $\overline{RD}$ rising edge at 1 (deassertion of $\overline{RD}$), the data read out from memory 2 is loaded into register 4 (as well as into the accumulator).

Next instructions 106 provides to increment the contents of port P2 which changes from 00100000 to 00100001.

Next instruction 107 is another read instruction of memory 2 which, however, owing to the effect of the P2 increment points to the second section of the circular buffer by estracting the printing pattern related to the ninth actuator.

In this case since A13 is still at logic level 1 while A8 has passed from level 0 to Level 1, flip flop 5 is actually enabled to the loading of the bit present on ADBUS0 lead.

At the same time flip flop 7 is set, then register 4 and flip flop 5 are enabled to the transfer of the printing pattern on the register outputs and on lead 19 respectively on which they put signals at either logic level 1 or 0 according to the printing pattern.

Obviously the outputs from register 4 and lead 9 are connected to as many control circuits 25 of the actuators.

Such control circuits can be embodied in several forms which are beyond the purposes of the invention.

For example the control circuits can be embodied as described in US-A-4.048.665 and for their triggering they may require a short positive pulse.

By the next instruction 108 the A accumulator is reset.

By instruction 109 a memory write operation is executed, which loads in the memory location addressed by instruction 107 a code of all zeroes, that is, it blanks said location.

By instruction 110 the contents of port P2 is decremented.

By means of instruction 111 a memory write operation is performed which stores in the memory location addressed by the previous instruction 105 a code of all zeroes, that is, it empties said location.

Instructions 108, 109 and 111 are not in any way imposed by or associated with the loading mechanism of register 4 and flip flop 5, but by requirements which are external to the printing process, for example, by the loading process of the circular buffer.

Said process, infact, may require that the buffer area already used for the printing be first emptied before being filled up with new printing patterns.

In the example described, however, the write instructions are used for an accessory function to the printing process.

In fact through the memory write instruction 109 the write command $\overline{WR}$ is set to zero on the part of processor 1.

This causes flip flop 7 to be reset and as a result the output from register 4 and port 13 becomes disabled.

If there are no write instructions in the printing routine the function carried out by flip flop 7 can be obtained in an equivalent way by a one-shot circuit, or it may result redundant if the command pulses in output from register 4 and flip flop 5 can have a duration equal to the period corresponding to the frequency with which the same are loaded with a new printing pattern (83 microsec.).

The printing routine si completed by instructions 112 to 116 which are essentially updating and recovering instructions.

Through instruction 112 the contents of the R0 register is incremented, that is, the pointer to the circular buffer is updated to preset it for a subsequent printing routine.

By means of instruction 113 port P2 is loaded with the contents of an internal save register R6.

By means of instruction 114 the accumulator is reassigned its original contents which was already saved in register R7.

By instruction 115 the pre-existing program status word is reloaded into the status register.

By instruction 110 the return from the interrupt routine to the previously running routine is performed.

By means of the arrangement which is the object of the present invention the printing routine requires globally 26 microprocessor cycles, that is 26 microsec.

Fig. 3 shows by comparison a similar routine developed by a control unit of a type known in the art, where the direct loading of the information read from memory in the command registers of the print elements is not provided.

After instruction 201,202,203 which coincide with the corresponding instructions 101,102,103 shown in Fig. 2, instruction 204 loads in P2 an HADDR address whose only function is to select memory 2.

By means of the next instruction 205 the printing pattern, which is read from memory is loaded into the accumulator only.

Therefore a further instruction 205A is required to save said pattern into a suitable register R10.

By means of instruction 207 the second portion of the printing pattern read from memory is stored in the accumulator only. Therefore a further instruction 207A is required to save said pattern into a suitable register R11.

Instruction 207A can be followed by instructions 208 through 212 for blanking the locations read from the circular accumulator and for the updating of the pointer.

However at this point it is necessary to actually transfer the printing patterns from the internal save registers to the external registers (register 4 and flip flop 5).

For this purpose it is necessary to load Port P2 with an address code # R4 allowing register R4 (instruction 212A) to be selected. It is then necessary to transfer the R10 contents into the A accumulator (instruction 212 B).

Next it is necessary to transfer the contents of the A accumulator into register R4 (instruction 212C).

By incrementing the contents of P2 it can be arranged for the new address to select flip flop 5 (instruction 212D).

Finally it is necessary to load the A accumulator with the contents of register R11 (instruction 212E) and transfer the accumulator contents in flip flop 5 (instruction 212 F).

The successive instructions from 212 to 216 can be identical to the corresponding instructions 112, 116.

The resulting printing routine requires 11 additional cycles. Hence its total duration is 37 microsec.

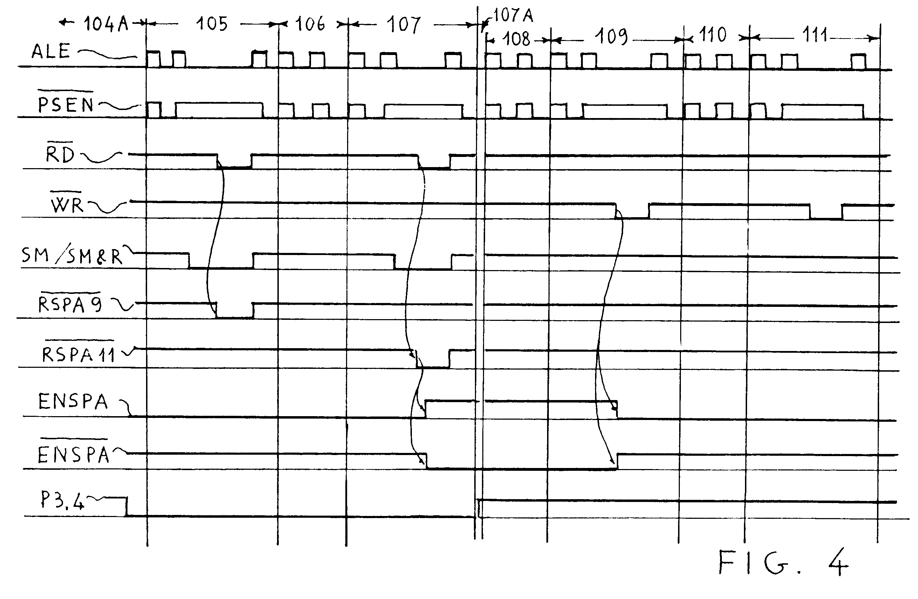

It is therefore clear that the described control unit, which offers the possibility of implementing a simplified printing routine allows for the reduction of the routine execution times by upward of 25%. For completeness of description Fig. 4 shows in timing diagram some signals generated during the execution of the most significant instructions of the printing routine, particularly instructions from 105 to 111.

The vertical lines divide the diagram into microprocessor cycles or double cycles during which various microinstructions are executed. The ALE and $\overline{PSEN}$ diagrams represent two ALE and $\overline{PSEN}$ timing signals which are generated by microprocessor 1.

Said signals define the time interval within the microprocessor cycles where the addresses on the ABUS bus are significant. Substantially the program addresses, sent to ROM memory 26 on the ABUS bus are valid when ALE any $\overline{PSEN}$ are jointly at logic level 0. This happens twice within each mircoprocessor cycle or double cycle for the fetching of 2 bytes instructions.

Viceversa the addresses of memory 2 on the ABUS bus are significant for all the time during which ALE is at logic level O while $\overline{PSEN}$ is at logical level 1.

As a consequence, as shown by diagram SM&R signal SM&R, as a result of an address decoding, is substantially significant during the same time interval (with the delay due to the propagation time in decoder 3).

Diagram $\overline{RD}$ shows the timing signal $\overline{RD}$ generated by microprocessor 1 during the execution of the various cycles.

$\overline{RD}$ goes to logic level 0 for suitable time intervals during the execution of the read instruction of memory 2.

Diagram $\overline{WR}$ shows the timing signal $\overline{WR}$ generated by microprocessor 1 during the execution of memory 2 write instructions.

Diagram $\overline{RSPA9}$ shows signal $\overline{RSPA9}$ in output from the OR gate 9. Diagram $\overline{RSPA11}$ shows signal $\overline{RSPA11}$ in output from or gate 11. Diagrams ENSPA and $\overline{ENSPA}$ show the signal in output from ports Q and Q respectively of flip flop 7 and define the duration of the command pulses for actuators 25.

It is obvious that the previous description relates only to a preferred embodiment of this invention and that several changes can be made without any departure from the purpose of this invention. Microprocessor 1, even if preferably constituted by the MC 8051 integrated circuit, can be equally constituted by any other microprocessor such as the 8055 microprocessor which is also produced by INTEL firm.

The number of actuators may be different from 9 any correspondingly the form of embodiment of the control units and of the printing routine may change.

In case the number of the printing elements is 7 or 8 it is obvious that there is a circuit semplification.

In case the number of the printing elements is comprised within 9 and 16 minor circuit changes and no printing routine modifications are required.

For a higher number of actuators and with the parallelism of the control unit unchanged, the circuit and routine modifications can be easily deduced from the previous description.

It should also be noted that decoder 3 shown in fig 1 is not strictly required, its function being only that of obtaining from a limited number of addressing bits a higher number of mutually exclusive selection signals.

From this point of view if the selection signals required for the control of the various units connected to the system bus are in a limited number it is possible to use a specific address bit for each one of various units.

For example, with reference to Fig. 1, bit A14 can be used to select the needle command register and bit A13 to select memory 2 by generation of signal SM.

It follows that, since the bits A13 and A14 can be set at command level independently, that is, jointly, even the function carried out by AND gate 6 is redundant.

The tradeoff of such changes is obviously a limitation of the addressable memory space to $2^{13}$ locations only with address bit A0-12.

As for the joint selection of memory 2 and the needle control register, this limitation can be easily overcome if microprocessors such as INTEL 8051 and 8052 are used. Such processor, beside having addressing ports P2 and P0 are further provided with at least an output port with individually programmable bits.

In this case for the generation of a selection signal of the needle control register it is possible to use a bit in output from such additional port, which is preset at a suitable point of the needles control routine so as to have available thereafter a signal which can carry out the same function performed by signal SM&R shown in Fig. 1 until it is reset at a second point in the needles control routine flow.

The concept used here, is again to have a signal which is present at prefixed level or asserted for a plurality of successive microprocessor cycles and that, in conjunction with a read signal of data memory 2, determines at each occurence of the read signal the loading of the printing elements control.

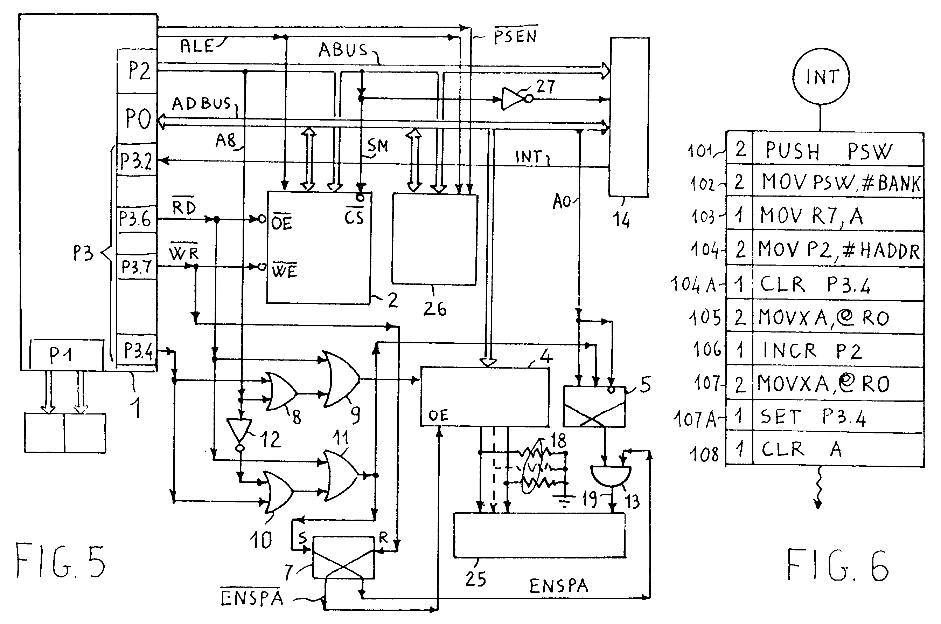

Fig. 5 shows an embodiment of this concept.

The system shown in Fig. 5 differs from that in Fig. 1 in few details only.

Therefore a complete description of the circuits and their functioning is not repeated.

The constituent elements corrisponding to those in Fig. 1 are indicated by the same reference numbers.

It will be noted that in the embodiment shown in Fig. 5 decoder 3 and logic AND gate 6 are not present.

In this case the selection function of memory 2 as an alternative to selection of the I/O port 14 is carried out directly by the bit A 15 of the ABUS bus which is applied directly to input $\overline{CS}$ of memory 2 with a function which is equivalent to that of signal SM.

The selection of the I/O port 14 is carried out by bit A 15 itself which is applied to port 14 in inverted form through NOT 27. The selection of register 4 and flip flop 5 is carried out by terminal P.3.4 of port P.3.

Terminal P 3.4 is connected to an input of the or gate 8 and to an input of the OR gate 10 and it applies to said inputs a signal substitutive for signal SM&R shown in Fig. 1.

Fig. 6 partially shows the printing needle routine which is executed by microprocessor 1.

This routine differs from that shown in Fig. 2 only by the addition of two instructions.

Thus the instructions marked with numbers 101 through 104, which have the functions of saving the interrupted programs and presetting port P2, are followed by an additional instruction 104A (CLR P3.4) having duration of one processor cycle.

By such instruction terminal P3.4 is reset at logic level 0. This logic level is kept during the execution of the successive instructions and when logically ANDed with bit A8 on the ABUS bus and with signal $\overline{RD}$ it determines, in the course of the execution of the successive instructions 105, 107 the loading of the information read from memory 2 into register 4 and flip flop 5 respectively.

Soon after, terminal P3.4 can be set at logic level 1 by an additional instruction 107 A (SET P3.4) so that further read instruction of memory 2 do not affect the status of register 4 and flip flop 5.

For greater enphasis Fig. 4 shows in diagram (P3.4) the status of terminal P3.4.

Even in this case the printing elements control routine requires an execution time largely lesser than that required by the routine shown in Fig. 3.

**Claims**

1. Microprocessor control unit for a serial dot matrix printer comprising a microprocessor (1) having a plurality of I/O ports (P0,P2,P3) for outputting addresses, data, control and timing signals and for inputting data and signals, a system bus (ABUS, ADBUS) connected to a first set (P0,P2) of said I/O ports, leads connected to a second set (P3) of said I/O ports for conveying control and timing signals ($\overline{RD},\overline{WR}$), a working memory (2) connected to said bus and to a set of said leads for receiving control and timing signals ($\overline{RD},\overline{WR}$), addresses (A0-7,A8-12) and data to be stored and for sending data read out from said memory to said microprocessor, a first control register (4) for printing elements, said control register having inputs connected to said bus (ADBUS) for receiving from said microprocessor (1) and loading in said first control register (4), in response to deassertion of a first load command (RSPA9), a control information set for said printing elements, outputted on said bus by said microprocessor (1), said microprocessor (1) operating in subsequent cycles for the sequential execution of instructions, said control unit being characterized in that it comprises first logic means (8,9) responsive to a timed memory read command ($\overline{RD}$), asserted by said microprocessor, and to a first signal (ABUS 13-15) output from one of said I/O ports (P2,P3), said first signal being in an asserted state concurrently with said read command ($\overline{RD}$), to assert and deassert said first load command ($\overline{RSPA9}$) for said first register (4) with the assertion and deassertion respectively of said read command ($\overline{RD}$), whereby a control information set, read out from said memory (2) in response to the assertion of said memory read command (RD), and present on said bus before deassertion of said memory read command, is directly loaded into said first register (4), with the deassertion of said read command ($\overline{RD}$) and the consequent deassertion of said first load command ($\overline{RSPA9}$).

2. Microprocessor control unit as claimed in claim 1 wherein said memory (2) has a predetermined capacity and said first signal is an address signal (ABUS13,14,15) defining addresses which exceed said predetermined capacity.

3. Microprocessor control unit as claimed in Claim 1, comprising a second control register (5) for printing elements, having inputs connected to said bus (ABUS,ADBUS) for receiving from said microprocessor (1) and loading in said second register (5), in response to deassertion of a second load command command ($\overline{RSPA11}$), a control information set for said printing elements, outputted on said bus by said memory (2), further comprising:
   - second logic means (10,11) responsive to said timed memory read command ($\overline{RD}$), asserted by said microprocessor (1), and to said first signal (ABUS 13-15), in asserted state concurrently with said read command ($\overline{RD}$), to assert and deassert said second load command (RSPA11) for said second register (5), with the assertion and deassertion of said read command ($\overline{RD}$) respectively, whereby a control information set for said printing elements, read out from said memory (4) in response to the assertion of said memory read command (RD) and present on said bus before deassertion of said read command (RD), is directly loaded in said second register (5), said first (8,9) and second (10,11) logic means being enabled in a mutually exclusive way to assert said first and second load command ($\overline{RSPA9},\overline{RSPA11}$) by an address signal (A8) outputted by said microprocessor and having a first binary level for addressing said memory (2) in a first read operation and a second binary level for addressing said memory (2) in a second read operation.

4. Microprocessor control unit as claimed in claim 3 wherein said first signal is a signal asserted in output from one (P3.4) of said I/O ports during a first microprocessor cycle and maintained asserted for a plurality of subsequent cycles during which cycles a plurality of memory read operations is performed.

5. A control process of a microprocessor control unit for a serial dot matrix printer comprising a microprocessor (1) having a plurality of I/O ports (P0,P2,P3) for outputting addresses, data, control and timing signals and for inputting data and signals, a system bus (ABUS, ADBUS) connected to a first set (P0,P2) of said I/O ports, leads connected to a second set (P3) of said I/O ports for conveying control and timing signals ($\overline{RD},\overline{WR}$), a working memory (2) connected to said bus and to a set of said leads for receiving control and timing signals ($\overline{RD},\overline{WR}$),addresses (A0-7,A8-12) and data to be stored and for sending data read out from said memory to said microprocessor, a first(4) and a second (5) control register for printing elements, said control registers having inputs connected to said bus (ADBUS) for receiving from said microprocessor (1) and loading in either said first control register (4) or said second control register (5), in response to deassertion of a first load command ($\overline{RSPA9}$) or a second load command ($\overline{RSPA11}$) respectively, a control information set for said printing elements, outputted on said bus by said memory (2) owing to assertion of a memory read control signal ($\overline{RD}$) by said microprocessor, said microprocessor (1) operating in subsequent cycles for the sequential execution of instructions, said control unit further comprising logic means (8,9,10,11) responsive to said memory read control signal ($\overline{RD}$) and to a first signal output from one of said I/O ports (P3.4) and asserted by said microprocessor, to respectively assert and deassert said first and second load commands ($\overline{RSPA9},\overline{RSPA11}$) with the assertion and deassertion respectively of said read command ($\overline{RD}$), said logic means being further responsive to an address signal (A8), outputted by said microprocessor, for asserting said first or second load command ($\overline{RSPA9},\overline{RSPA11}$) in a mutually exclusive way depending on the binary level of said address signal (A8), said control process being characterized by the following ordered operative phases:

- preset, by executing a first instruction, of an I/O port for asserting said first signal during the time in which a plurality of subsequent instructions is executed,
- execution of a second instruction, which is a a memory read instruction and joint loading of said first control register with an information read out from said memory, owing to the continued assertion of said first signal,
- execution of a third instruction, which is a memory read instruction and joint loading of said second control register with an information read out from said memory, owing to the continued assertion of said first signal.

**Patentansprüche**

1. Mikroprozessor-Steuereinheit für einen seriellen Punktmatrixdrucker mit einem Mikroprozessor (1), der mehrere Ein/Ausgabeanschlüsse (P0, P2, P3) zur Ausgabe von Adressen, Daten, Steuer- und Zeitsignalen sowie zur Eingabe von Daten und Signalen, ferner einen an eine erste Gruppe (P0, P2), der Ein/Ausgabeanschlüsse angeschlossenen Systembus (ABUS, ADBUS), an eine zweite Gruppe (P3) der Ein/Ausgabeanschlüsse angeschlossene Leitungen zur Übertragung von Steuer- und Zeitsignalen (RD, WR), einen an den Bus und eine Gruppe der Leitungen angeschlossenen Arbeitsspeicher (2) zur Aufnahme von Steuer- und Zeitsignalen ($\overline{RD}$, $\overline{WR}$), Adressen (A0 - 7, A8 - 12) und zu speichernden Daten und zum Senden aus dem Speicher ausgelesener Daten an den Mikroprozessor aufweist, ferner ein erstes Steuerregister (4) für Druckelemente enthält, dessen Eingänge an den Bus (ADBUS) angeschlossen sind, um einen vom Mikroprozessor (1) über den Bus ausgegebenen Satz von Steuerinformationen für die Druckelemente bei Aufhebung eines ersten Ladebefehls (RSPA9) vom Mikroprozessor (1) zu empfangen und in den ersten Steuerspeicher (4) zu laden, wobei der Mikroprozessor (1) in aufeinanderfolgenden Zyklen Befehle nacheinander abarbeitet und die Steuereinheit **dadurch gekennzeichnet** ist, daß sie eine erste Logikschaltung (8, 9) aufweist, welche auf einen vom Mikroprozessor bestätigten zeitbestimmten Speicherlesebefehl ($\overline{RD}$), sowie ein von einem der Ein/Ausgabeanschlüsse (P2, P3) geliefertes und gleichzeitig mit dem Lesebefehl ($\overline{RD}$) in einem bestätigten Zustand befindliches erstes Signal (ABUS 13 - 15) anspricht, um den ersten Ladebefehl (RSPA9) für das erste Register (4) mit der Bestätigung bzw. Aufhebung des Lesebefehls ($\overline{RD}$) zu be-

stätigen bzw. aufzuheben, wodurch ein bei Bestätigung des Speicherlesebefehls ($\overline{RD}$) aus dem Speicher (2) ausgelesener und vor der Aufhebung des Speicherlesebefehls auf dem Bus befindlicher Satz von Steuerinformationen bei Aufhebung des Lesebefehls ($\overline{RD}$) und der anschließenden Aufhebung des ersten Ladebefehls (RSPA9) direkt in das erste Register (4) geladen wird.

2. Mikroprozessor-Steuereinheit nach Anspruch 1, wobei der Speicher (2) eine vorgegebene Kapazität hat und das erste Signal ein Adreßsignal (ABUS13, 14, 15) ist, welches die vorgegebene Kapazität überschreitende Adressen definiert.

3. Mikroprozessor-Steuereinheit nach Anspruch 1, mit einem zweiten Steuerregister (5) für Druckelemente, welches an den Bus (ABUS, ADBUS) angeschlossene Eingänge aufweist, um beim Aufheben eines zweiten Ladebefehls (RSPA11) einen vom Speicher (2) auf dem Bus ausgegebenen Satz von Steuerinformationen vom Mikroprozessor (1) zu empfangen und in das zweite Register (5) zu laden; mit

- einer zweiten Logikschaltung (10, 11), welche einerseits auf den vom Mikroprozessor (1) bestätigten zeitbestimmten Speicherlesebefehl ($\overline{RD}$) und andererseits auf das im bestätigten Zustand gleichzeitig mit dem Lesebefehl ($\overline{RD}$) auftretende erste Signal (ABUS13 - 15) anspricht, um bei Bestätigung bzw. Aufhebung des Lesebefehls ($\overline{RD}$) den zweiten Ladebefehl (RSPA11) zu bestätigen bzw. aufzuheben, wodurch ein bei Bestätigung des Speicherlesebefehls ($\overline{RD}$) aus dem Speicher (2) ausgelesener und vor der Aufhebung des Lesebefehls auf dem Bus befindlicher Satz von Steuerinformationen für die Druckelemente direkt in das zweite Register (5) geladen wird, und wobei die ersten (8, 9) und zweiten (10, 11) Logikschaltungen zur Bestätigung des ersten und zweiten Ladebefehls (RSPA9, RSPA11) durch ein vom Mikroprozessor ausgegebenes Adreßsignal (A8) gegenseitig exklusiv aktiviert werden, welches Adreßsignal zum Adressieren des Speichers (2) in einer ersten Leseoperation einen ersten Binärpegel und zum Adressieren des Speichers (2) in einer zweiten Leseoperation einen zweiten Binärpegel aufweist.

4. Mikroprozessor-Steuereinheit nach Anspruch 3, bei der das erste Signal ein von einem (P3.4) der Ein/Ausgabeanschlüsse während einem ersten Mikroprozessorzyklus ausgegebenes bestätigtes Signal ist, welches über mehrere folgende Zyklen bestätigt bleibt, während denen mehrere Speicherleseoperationen durchgeführt werden.

5. Steuerverfahren einer Mikroprozessor-Steuereinheit für einen seriellen Punktmatrixdrucker mit einem Mikroprozessor (1), der mehrere Ein/Ausgabeanschlüsse (P0, P2, P3) zur Ausgabe von Adressen, Daten, Steuer- und Zeitsignalen sowie zur Eingabe von Daten und Signalen, ferner einen an eine erste Gruppe (P0, P2) der Ein/Ausgabeanschlüsse angeschlossenen Systembus (ABUS, ADBUS), weiterhin an eine zweite Gruppe (P3) der Ein/Ausgabeanschlüsse angeschlossene Leitungen zur Übertragung von Steuer- und Zeitsignalen ($\overline{RD}$, $\overline{WR}$), einen an den Bus und eine Gruppe der Leitungen angeschlossenen Arbeitsspeicher (2) zur Aufnahme von Steuer- und Zeitsignalen ($\overline{RD}$, $\overline{WR}$), Adressen (A0 - 7, A8 - 12) und zu speichernden Daten und zum Senden aus dem Speicher ausgelesener Daten an den Mikroprozessor aufweist, ferner ein erstes (4) und ein zweites Steuerregister für Druckelemente enthält, deren Eingänge an den Bus (ADBUS) angeschlossen sind, um bei Aufhebung eines ersten Ladebefehls (RSPA9) bzw. eines zweiten Ladebefehls (RSPA11) einen bei Bestätigung eines Speicherlesesteuersignals ($\overline{RD}$) durch den Mikroprozessor vom Speicher (2) über den Bus ausgegebenen Satz von Steuerinformationen für die Druckelemente vom Mikroprozessor (1) zu empfangen und entweder in das erste Steuerregister (4) oder in das zweite Steuerregister (5) zu laden, wobei der Mikroprozessor (1) in aufeinanderfolgenden Zyklen Befehle nacheinander abarbeitet und die Steuereinheit ferner Logikschaltungen (8, 9, 10, 11) umfaßt, welche einerseits auf das Speicherlesesteuersignal ($\overline{RD}$) und andererseits auf ein von einem der Ein/Ausgabeanschlüsse (P3.4) geliefertes und vom Mikroprozessor bestätigtes erstes Signal anspricht, um mit der Bestätigung bzw. Aufhebung des Lesebefehls ($\overline{RD}$) die ersten und zweiten Ladebefehle (RSPA9, RSPA11) zu bestätigen bzw. aufzuheben, wobei die Logikschaltungen auf ein vom Mikroprozessor geliefertes Adreßsignal (A8) ansprechen, um in Abhängigkeit vom Binärpegel des Adreßsignals (A8) gegenseitig exklusiv den ersten oder zweiten Ladebefehl (RSPA9, RSPA11) zu bestätigen;

**gekennzeichnet durch** folgende nacheinander ablaufende Phasen des Steuerverfahrens:

- durch Ausführen eines ersten Befehls, Vorgabe eines Ein/Ausgabeanschlusses zum Bestätigen des ersten Signals während der Zeit, in welcher mehrere nachfolgende Befehle ausgeführt werden;
- Ausführen eines zweiten Befehls, der ein Speicherlesebefehl ist, verbunden mit dem Laden von Informationen aus dem Speicher in das erste Steuerregister aufgrund der anhaltenden Bestätigung des ersten Signals;
- Ausführen eines dritten Befehls, der ein Speicherlesebefehl ist, verbunden mit dem Laden von Informationen aus dem Speicher in das zweite Steuerregister aufgrund der anhaltenden Bestätigung des ersten Signals.

**Revendications**

1. Unité de commande à microprocesseur pour imprimante série par points, comprenant un microprocesseur(1) comportant une pluralité de portes d'accès d'entrée/sortie (P0,P2,P3) pour sortir des adresses, des données, des signaux de commande et de synchronisation et pour entrer des données et des signaux, un bus de système (ABUS,ADBUS) connecté à un premier ensemble (P0,P2) desdites portes d'accès E/S, des conducteurs connectés à un second ensemble (P3) desdites portes d'accès E/S pour acheminer des signaux de commande et de synchronisation ($\overline{RD},\overline{WR}$), une mémoire de travail (2) connectée audit bus et à un ensemble desdits conducteurs pour recevoir des signaux de commande et de synchronisation ($\overline{RD},\overline{WR}$), des adresses (A0-7,A8-12) et des données à mémoriser et pour envoyer les données lues dans ladite mémoire audit microprocesseur, un premier registre de commande (4) pour des éléments d'impression, ledit registre de commande comportant des entrées connectées audit bus (ADBUS) pour recevoir dudit microprocesseur (1) et charger dans ledit premier registre de commande (4), en réponse à la désexcitation d'une première commande de chargement (RSPA9), un ensemble d'informations de commande pour lesdits éléments d'impression, sorti sur ledit bus par ledit microprocesseur (1), ledit microprocesseur (1) fonctionnant pendant des cycles suivants pour l'exécution séquentielle d'instructions, ladite unité de commande étant caractérisée en ce qu'elle comprend des premiers moyens logiques (8,9) réagissant à une commande de lecture de mémoire synchronisée ($\overline{RD}$), excitée par ledit microprocesseur, et à un premier signal (ABUS13-15) en sortie d'une desdites portes d'accès E/S (P2,P3), ledit premier signal étant dans un état excité en même temps que ladite commande de lecture ($\overline{RD}$), pour exciter et désexciter ladite première commande de chargement ($\overline{RSPA9}$) destinée audit premier registre (4) avec l'excitation et la désexcitation respectivement de ladite commande de lecture ($\overline{RD}$), un ensemble d'informations de commande, lu dans ladite mémoire (2) en réponse à l'excitation de ladite commande de lecture de mémoire ($\overline{RD}$), et présent sur ledit bus avant la désexcitation de ladite commande de lecture de mémoire, étant ainsi directement chargé dans ledit premier registre (4), avec la désexcitation de ladite commande de lecture ($\overline{RD}$) et la désexcitation résultante de ladite première commande de chargement ($\overline{RSPA9}$).

2. Unité de commande à microprocesseur selon la revendication 1, dans laquelle ladite mémoire (2) a une capacité prédéterminée et ledit premier signal est un signal d'adresse (ABUS13,14,15) définissant des adresses qui dépassent ladite capacité prédéterminée.

3. Unité de commande à microprocesseur selon la revendication 1, comprenant un second registre de commande (5) pour les éléments d'impression, comportant des entrées connectées audit bus (ABUS,ADBUS) pour recevoir dudit microprocesseur (1) et charger dans ledit second registre (5), en réponse à la désexcitation d'une seconde commande de chargement ($\overline{RSPA11}$), un ensemble d'informations de commande pour lesdits éléments d'impression, sorti sur ledit bus par ladite mémoire (2), comprenant en outre:

des seconds moyens logiques (10,11) réagissant à ladite commande de lecture de mémoire synchronisée ($\overline{RD}$), excitée par ledit microprocesseur (1), et audit premier signal (ABUS13-15), dans un état excité en même temps que ladite commande de lecture ($\overline{RD}$), pour exciter et désexciter ladite seconde commande de chargement ($\overline{RSPA11}$) destinée audit second registre (5), avec l'excitation et la désexcitation de ladite commande de lecture ($\overline{RD}$) respectivement, un ensemble d'informations de commande pour lesdits éléments d'impression, lu dans ladite mémoire (2) en réponse à l'excitation de ladite commande de lecture de mémoire (RD) et présent sur ledit bus avant la désexcitation de ladite commande de lecture (RD),étant ainsi chargé directement dans ledit second registre (5),lesdits premiers (8,9) et seconds (10,11) moyens logiques étant validés d'une manière exclusive entre eux pour exciter lesdites première et seconde comman-

des de chargement ($\overline{\text{RSPA9}}$,$\overline{\text{RSPA11}}$) par un signal d'adresse (A8) sorti par ledit microprocesseur et ayant un premier niveau binaire pour adresser ladite mémoire (2) dans une première opération de lecture et un second niveau binaire pour adresser ladite mémoire (2) dans une seconde opération de lecture.

4. Unité de commande à microprocesseur selon la revendication 3, dans laquelle ledit premier signal est un signal excité en sortie d'une (P3.4) desdites portes d'accès E/S pendant un premier cycle du microprocesseur et maintenu excité pendant une pluralité de cycles suivants pendant lesquels cycles une pluralité d'opérations de lecture de mémoire est exécutée.

5. Procédé de commande d'une unité de commande à microprocesseur pour imprimante série par points, comprenant un microprocesseur (1) comportant une pluralité de portes d'accès d'entrée/sortie (P0,P2,P3) pour sortir des adresses, des données, des signaux de commande et de synchronisation et pour entrer des données et des signaux, un bus de système (ABUS,ADBUS) connecté à un premier ensemble (P0,P2) desdites portes d'accès E/S, des conducteurs connectés à un second ensemble (P3) desdites portes d'accès E/S pour acheminer des signaux de commande et de synchronisation ($\overline{\text{RD}}$,$\overline{\text{WR}}$), une mémoire de travail (2) connectée audit bus et à un ensemble desdits conducteurs pour recevoir des signaux de commande et de synchronisation ($\overline{\text{RD}}$,$\overline{\text{WR}}$), des adresses (A0-7,A8-12) et des données à mémoriser et pour envoyer les données lues dans ladite mémoire audit microprocesseur, un premier (4) et un second (5) registre de commande pour des éléments d'impression, lesdits registres de commande ayant des entrées connectées audit but (ADBUS) pour recevoir du microprocesseur (1) et charger dans le premier registre de commande (4) ou dans ledit second registre de commande (5), en réponse à la désexcitation d'une première commande de chargement ($\overline{\text{RSPA9}}$) ou d'une seconde commande de chargement ($\overline{\text{RSPA11}}$) respectivement, un ensemble d'informations de commande pour lesdits éléments d'impression, sorti sur ledit bus par ladite mémoire (2) par suite de l'excitation d'un signal de commande de lecture de mémoire ($\overline{\text{RD}}$) par ledit microprocesseur, ledit microprocesseur (1) fonctionnant pendant des cycles suivants pour l'exécution séquentielle d'instructions, ladite unité de commande comprenant en outre des moyens logiques (8,9,10,11) réagissant audit signal de commande de lecture de mémoire ($\overline{\text{RD}}$) et à

un premier signal sorti par une desdites portes d'accès (P3.4) et excité par ledit microprocesseur, pour exciter et désexciter respectivement lesdites première et seconde commandes de chargement ($\overline{\text{RSPA9}}$,$\overline{\text{RSPA11}}$) avec l'excitation et la désexcitation respectivement de ladite commande de lecture($\overline{\text{RD}}$), lesdits moyens logiques réagissant en outre à un signal d'adresse (A8), sorti par ledit microprocesseur, pour exciter ladite première ou seconde commande de char($\overline{\text{RSPA9}}$,$\overline{\text{RSPA11}}$) d'une manière exclusive entre eux selon le niveau binaire dudit signal d'adresse (A8), ledit procédé de commande étant caractérisé par les phases actives ordonnées suivantes:

- le prépositionnement ,par l'exécution d'une première instruction, d'une porte d'accès E/S pour exciter ledit premier signal pendant le temps où une pluralité d'instructions suivantes est exécutée,

- l'exécution d'une deuxième instruction, qui est une instruction de lecture de mémoire et le chargement conjoint dudit premier registre de commande avec des informations lues dans ladite mémoire, par suite de l'excitation maintenue dudit premier signal,

- l'exécution d'une troisième instruction, qui est une instruction de lecture de mémoire et le chargement conjoint dudit second registre de commande avec des informations lues dans ladite mémoire, par suite de l'excitation maintenue dudit premier signal.

FIG. 1

EP 0 230 896 B1

EP 0 230 896 B1

FIG. 2   (INT)

| | | |
|---|---|---|
| 101 | 2 | PUSH   PSW |
| 102 | 2 | MOV PSW, #BANK3 |
| 103 | 1 | MOV R7 , A |
| 104 | 2 | MOV P2,# HADDR |
| 105 | 2 | MOVX A, @ R0 |
| 106 | 1 | INCR  P2 |
| 107 | 2 | MOVX A, @ R0 |
| 108 | 1 | CLR  A |
| 109 | 2 | MOVX @ R0, A |
| 110 | 1 | DECR  P2 |
| 111 | 2 | MOVX @ R0  A |
| 112 | 1 | INCR  R0 |
| 113 | 2 | MOV P2, R6 |
| 114 | 1 | MOV A, R7 |
| 115 | 2 | POP  PSW |
| 116 | 2 | RETI |

FIG. 3   (INT)

| | | |
|---|---|---|
| 201 | 2 | PUSH   PSW |
| 202 | 2 | MOV PSW, #BANK3 |
| 203 | 1 | MOV R7 , A |
| 204 | 2 | MOV P2, # HADDR |
| 205 | 2 | MOVX A, @ R0 |
| 205A | 1 | MOV R10, A |
| 206 | 1 | INCR  P2 |
| 207 | 2 | MOVX A , @ R0 |
| 207A | 1 | MOV R11 , A |
| 208 | 1 | CLR  A |
| 209 | 2 | MOVX @ R0, A |
| 210 | 1 | DECR  P2 |
| 211 | 2 | MOVX @ R0, A |
| 212 | 1 | INCR  R0 |
| 212A | 2 | MOV P2, # R4 |
| 212B | 1 | MOV A, R10 |
| 212C | 2 | MOVX @ R0, A |
| 212D | 1 | INCR  P2 |
| 212E | 1 | MOV A, R11 |
| 212F | 2 | MOVX @ R0, A |
| 213 | 2 | MOV P2, R6 |
| 214 | 1 | MOV A, R7 |
| 215 | 2 | POP  PSW |
| 216 | 2 | RETI |

15

FIG. 4

EP 0 230 896 B1

EP 0 230 896 B1

**FIG. 5**

P2
P0
P3.2
P3.6
P3.7
P3.4
P3
P1
1

ALE
ABUS
PSEN
ADBUS
A8
SM
INT
A0
14
27

RD
WR
OE
CS
WE
2
26

OE
4
18
19 13
25 ENSPA
5
8 9
12
11
10
S 7 R
ENSPA

---

**FIG. 6**

INT

| 101 | 2 | PUSH PSW |
|-----|---|----------|
| 102 | 2 | MOV PSW,#BANK |
| 103 | 1 | MOV R7,A |
| 104 | 2 | MOV P2,#HADDR |
| 104A | 1 | CLR P3.4 |
| 105 | 2 | MOVX A,@ R0 |
| 106 | 1 | INCR P2 |
| 107 | 2 | MOVX A,@ R0 |
| 107A | 1 | SET P3.4 |
| 108 | 1 | CLR A |